# EUROPEAN PATENT SPECIFICATION

(11) **EP 1 466 532 B1**
(45) Date of publication and mention of the grant of the patent: **25.06.2008**
(21) Application number: 04006994.0
(22) Date of filing: 23.03.2004
(51) Int. Cl.: A23G 9/28, A23G 9/00

(54) **Dispensing unit for soft ice cream machine**
Ausgabevorrichtung für Softeis-Maschine
Dispositif de distribution pour machine fabriquant des crèmes glacées molles

(30) Priority: 11.04.2003 IT GE20030028
(43) Date of publication of application: 13.10.2004
(73) Proprietor: ALI S.p.A. - CARPIGIANI GROUP, 40011 Anzola Emilia (Bologna) (IT)
(72) Inventor: Cocchi, Gino, 40137 Bologna (IT); Zaniboni, Gianni, 40044 Borgonuovo di Sasso Marconi (IT)
(74) Representative: Ghioni, Carlo Raoul Maria

(56) References cited:
- WO-A-01/80662
- WO-A-03/017776
- US-A- 2 803 381
- US-A- 3 301 440
- US-A- 3 724 984
- US-A- 5 159 818
- US-A- 5 410 888

## Description

The present invention relates to machines for making what is known as soft ice cream, and relates particularly to the dispensing unit of a machine of this type.

Such a device is generally mounted on (or made in one piece with) a base plate, which closes the front end of the freezing cylinder of the ice cream machine, and comprises a cylindrical chamber communicating, in the proximity of its lower end, with the freezing cylinder by means of a radial aperture which also passes through the said base plate and is provided with an axial dispensing aperture, in addition to a piston which is mounted slidably in this cylindrical chamber and is movable by suitable operating means (generally of the lever type) from a lower position, in which the piston shuts off the communication aperture and closes the dispensing aperture, to a second position, in which the raised piston allows the ice cream to flow out.

The aforesaid dispensing devices can be further divided into simple dispensers, in which the said device closes and controls the dispensing from a single freezing cylinder of the machine, multiple dispensers, in which a plurality of simple dispensers are placed in a series like the dispenser disclosed by document US 5410888, and mixers, in which a third dispenser, like the one disclosed by document US 3301440 is placed between two dispensers which control two adjacent cylinders of a single machine, this third dispenser communicating with both freezing cylinders to supply an ice cream having a mixture of flavours; such an ice cream usually appears to be divided into two halves which are essentially equal to each other.

In order to improve the attractiveness of the mixed flavour ice cream supplied by such machines, and also to offer new and more interesting combinations of flavours for the user, the present invention is intended to provide a dispensing unit for soft ice cream machines which is markedly different from those known in the prior art.

The object of the present invention is therefore a dispensing unit for soft ice cream machines, comprising the technical features disclosed by one or more of the appended claims.

Further advantages and characteristics of the present invention will be made clear by the following detailed description of an embodiment of the invention, provided by way of example and without restrictive intent, with reference to the attached drawings, in which:
Figure 1 is a cross-sectional view of the dispensing unit according to the present invention;
Figure 2 is a cross-sectional view of an enlarged detail of Figure 1, taken through the line II-II;
Figure 3 is a cross-sectional view of an enlarged detail of Figure 1, taken through the line III-III;
Figures 4 and 5 are two lateral elevations of ice creams dispensed by the dispensing unit according to the present invention; and
Figure 6 is a plan view from above of Figure 4.

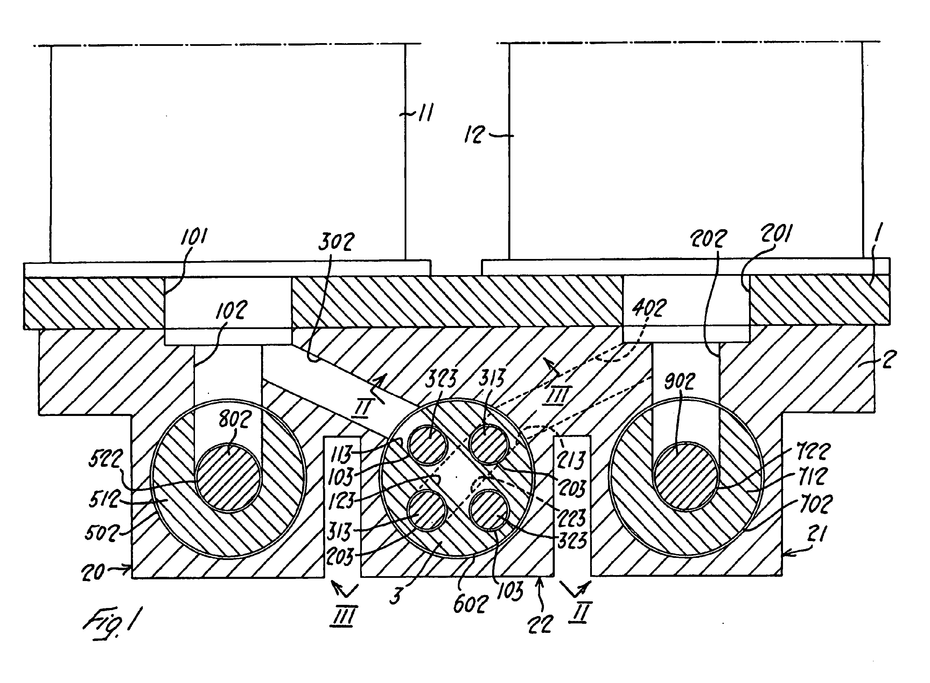

Figure 1 shows the dispensing unit for soft ice cream machines, according to the present invention; the number 1 indicates the base plate of the dispensing unit. The said plate is connected to a block 2 in which are formed the cylindrical chambers of the three dispensing devices with which the unit is provided, namely the two simple dispensers 20, 21 and the mixing dispenser 22. The apertures 101 and 201 are formed in the plate 1, thus enabling, respectively, the passage 102, which communicates with the chamber 502 of the dispenser 20, and the passage 202, which communicates with the chamber 702 of the dispenser 21, to communicate with the respective freezing cylinders 11 and 12. Two passages 302 and 402, the latter being shown in broken lines in the figure, are formed radially with respect to the passages 102 and 202 in the body 2, and carry the ice cream produced in the two freezing cylinders 11 and 12 to the cylindrical chamber 602 of the mixing dispenser 22.

A filler block 512, in which is formed an axial cavity 522, in which a piston 802 is inserted slidably in the usual way, is inserted in the cylindrical chamber 502 which communicates with the passage 102; the same configuration is provided in a similar way in the chamber 702.

In the chamber 602, on the other hand, a shaping element 3, in which the pairs of channels 103 and 203 are formed, is inserted. Each pair of channels 103, 203 communicates with the corresponding ice cream supply passage 302, 402 by means of the corresponding radial through holes 113, 213. Each channel of each pair is positioned diametrically opposite the other, and these channels are angularly equidistant from each other. The channels of each pair 103, 203 communicate with each other by means of corresponding passages 123, 223, which are extended into the through holes 113, 213. The supply passages 123, 223 for communication between the channels of each pair are formed at different heights, as will be made clearer by the following description.

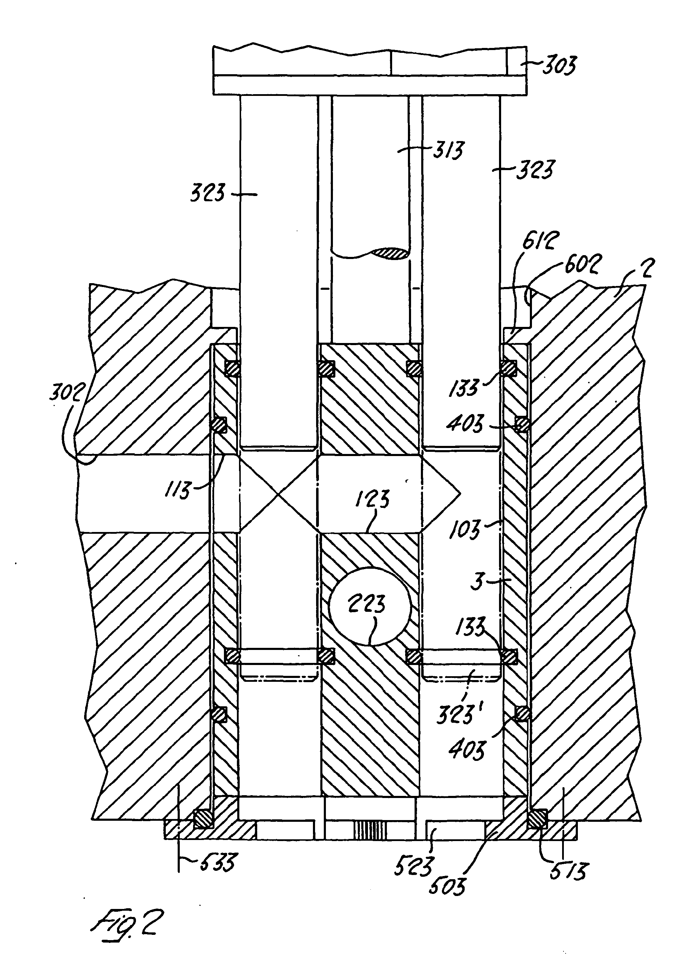

Figure 2 shows a section taken through the line II-II of Figure 1; identical numerals correspond to identical parts. Figure 2 shows the structure of the shaping element 3, which consists of a cylindrical block in which are formed the channels 103 and the channels 203, as described previously. The element 3 is inserted in the cavity 602 of the block 2, in the area between the flange 612 projecting radially from the inner wall of the said cavity 602 and the extrusion plate 503 for the exit of the ice cream, in which the extrusion holes 523 are formed, this extrusion plate being fixed to the block 2 by the fixing means 533 and provided with sealing means 513; sealing means 403 are provided between the outer wall of the element 3 and the inner wall of the cavity.

The channels 103 communicate with the supply passage 302 by means of the radial through hole 113, and communicate with each other by means of the passage 123. The presser element 303 comprises two pairs of pistons complementary to the channels 103, 203; Figure 2 shows the pistons 323 and one of the two pistons 313. As shown in the figure, the pistons 323 do not extend through the whole length of the channels 103; the sealing elements 133 have therefore been positioned within the said channels 103 both at the top and in the proximity of the end of the stroke of the said pistons (see also the end of stroke of the pistons indicated by 323' and shown in chained lines). The passage 223, through which the two channels 203, not shown here, communicate with each other, runs in an oblique direction with respect to the passage 123, in other words perpendicularly but in a different plane.

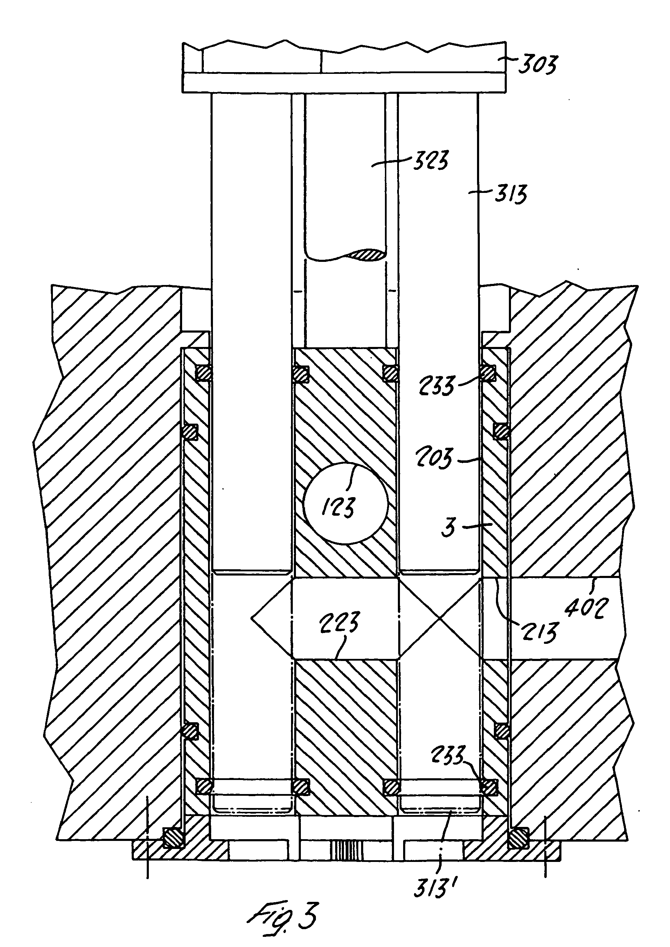

Figure 3 is a sectional view taken through the line III-III of Figure 1; identical numbers correspond to identical parts. As can be seen in the figure, the channels 203 of the element 3 communicate with the passage 402 of the block 2 by means of the radial through hole 213, and also communicate with each other by means of the passage 223. The ends of the strokes of the pistons 313 which are inserted into the channels 203 are in practice located at the end of the element 3 facing the extrusion plate 503, as shown by the chained lines and indicated by 313'. Consequently, the sealing elements 233 of the channels 203 are positioned at the two ends of the element 3.

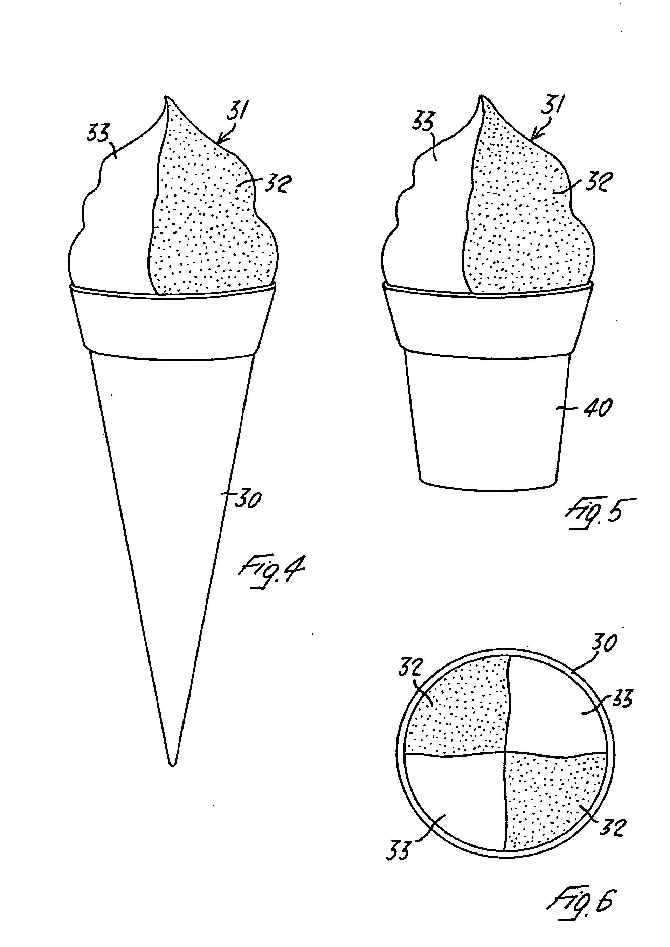

Figures 4, 5 and 6 show two examples of products formed by the dispensing unit according to the present invention. Both the cone 30 and the cup 40 contain the ice cream 31, in its two compositions of different flavours 32 and 33. As can be seen in Figure 6, the ice cream 31 is divided into four radial sectors of equal size, the sectors of ice cream having the same composition being diametrically opposite each other.

The operation of the dispensing unit according to the present invention will be made clear by the following description. when a mixed flavour ice cream is to be produced, the extruder means of the mixing dispenser 22, in other words the pistons 313 and 323, allow access to the channels 103 and 203 for the introduction of the ice cream arriving, respectively, from the passage 302 connected to the cylinder 11 and from the passage 402 connected to the cylinder 12. As a result of the configuration of the shaping element 3, the ice cream of different flavours is supplied to the different pairs of channels without interference between the pairs; it is only at the moment of passage through the extrusion plate 503 that the four flows of ice cream formed in the four channels 103, 203 are joined together to form the product shown in Figures 4 to 6. To enable the two pairs of channels 103, 203 to be supplied independently, the supply passages 302, 402 are formed in different transverse planes, and thus the supply apertures 113, 213 are formed in a similar way in the shaping element 3. Consequently, the lengths of the respective pistons 313, 323 differ from each other, since they must allow ice cream to be supplied from inlet apertures located at different heights.

## Claims

1. Dispensing unit for soft ice cream machines, comprising a base plate (1) which closes the front end of at least two freezing cylinders (11, 12), and at least three dispensing devices (20, 21, 22) including two simple dispensers (20, 21), each comprising a cylindrical chamber (522, 722) which communicates with the corresponding freezing cylinder (11, 12) by means of a radial aperture (101, 102) which also passes through the said base plate (1), and which is provided with an axial dispensing aperture, means (802, 902) being provided for extruding the ice cream through the said dispensing aperture, and a mixing dispenser (22) comprising a cylindrical chamber (602) which communicates, by means of suitable passages (302, 402), with both of the freezing cylinders (11, 12), and which is provided with an axial dispensing aperture, **characterized in that** the said chamber (602) of the said mixing dispenser (22) houses an element (3) for shaping the flow of ice cream, the said element (3) comprising at least two pairs of channels (103, 203) which do not communicate with each other; the channels (103, 203) of each pair communicating with each other by means of suitable passages (123, 223) and which are positioned diametrically opposite each other with respect to the axis of the said chamber (602) and whose axes are parallel to that of the said chamber (602), each of the said pairs of channels (103, 203) being supplied independently from one of the passages (302, 402) connected to the said freezing cylinders (11, 12); extruder means (313, 323) being provided and interacting with each of the said channels.

2. Dispensing unit according to Claim 1, in which the said passages (302, 402) for supplying the ice cream to the said mixing dispenser unit (22) are positioned on different transverse planes.

3. Dispensing unit according to Claim 1, in which the channels (103) of one pair are angularly equidistant from the channels (203) of the other pair.

4. Dispensing unit according to any one of the preceding claims, in which the said extruder means interacting with each of the said channels (103, 203) of the said shaping element (3) comprise pistons (313, 323) axially slidable in the said channels (103, 203).

## Patentansprüche

1. Ausgabevorrichtung für Softeis-Maschinen, bestehend aus einer Grundplatte (1), die das vordere Ende von mindestens zwei Gefrierzylindem (11, 12) abschließt, und mindestens drei Ausgabeeinrichtungen (20, 21, 22), von denen zwei als einfache Ausgabehähne (20, 21) ausgeformt sind, jeweils bestehend aus einer zylinderförmigen Kammer (522, 722), welche mit dem entsprechenden Gefrierzylinder (11, 12) über eine radiale Öffnung (101, 102) verbunden ist, die auch durch die genannte Grundplatte (1) führt, und welche mit einer axialen Ausgabeöffnung versehen ist, wobei Mittel (802, 902) vorgesehen sind, die dazu dienen, die Eiscreme durch die genannte Ausgabeöffnung zu pressen, während die dritte Ausgabeeinrichtung als Misch-Ausgabehahn (22) ausgeformt ist, bestehend aus einer zylinderförmigen Kammer (602), die über geeignete Durchgänge (302, 402) mit beiden Gefrierzylindern (11, 12) verbunden ist, und die mit einer axialen Ausgabeöffnung versehen ist; **dadurch gekennzeichnet**, das in der Kammer (602) des Misch-Ausgabehahns (22) ein Element (3) untergebracht ist, das zur Formung des Eiscremeflusses dient, wobei das genannte Element (3) aus mindestens zwei Paaren von Kanälen (103, 203) besteht, die nicht miteinander verbunden sind; wobei die Kanäle (103, 203) jedes Paares über geeignete Durchgänge (123, 223) miteinander verbunden sind und mit Bezug auf die Achse der genannten Kammer (602) diametral einander gegenüber liegen, während ihre Achsen parallel zu denen der Kammer (602) liegen; wobei jedes der Paare von Kanälen (103, 203) unabhängig über einen der Durchgänge (302, 402) versorgt wird, die mit den Gefrierzylindern (11, 12) verbunden sind; und wobei ferner Auspressmittel (313, 323) vorgesehen sind, die mit jedem der Kanäle in Wechselwirkung treten.

2. Ausgabevorrichtung nach Anspruch 1, bei der die genannten Durchgänge (302, 402) für die Zuführung der Eiscreme zu dem Misch-Ausgabehahn (22) auf verschiedenen Querebenen angeordnet sind.

3. Ausgabevorrichtung nach Anspruch 1, bei der die Kanäle (103) eines Paares im gleichen Winkelabstand zu den Kanälen (203) des anderen Paares liegen.

4. Ausgabevorrichtung nach einem der vorhergehenden Ansprüche, bei der die Auspressmittel, die mit jedem der Kanäle (103, 203) des Formungselements (3) in Wechselwirkung treten, Kolben (313, 323) umfassen, die axial in den Kanälen (103, 203) gleiten können.

## Revendications

1. Un dispositif de distribution pour des machines fabriquant des crèmes glacées molles, comprenant une plaque de base (1) qui ferme l'extrémité avant d'au moins deux cylindres de réfrigération (11, 12), et au moins trois dispositifs distributeurs (20, 21, 22) comprenant deux distributeurs simples (20, 21), comprenant chacun une chambre cylindrique (522, 722) qui communique avec le cylindre de réfrigération (11, 12) correspondant par le biais d'une ouverture radiale (101, 102) traversant également ladite plaque de base (1), et qui est dotée d'une ouverture de distribution axiale, des moyens (802, 902) étant prévus pour extruder la crème glacée à travers ladite ouverture de distribution, et un distributeur mélangeur (22) comprenant une chambre cylindrique (602) qui communique, par le biais de conduits (302, 402) appropriés, avec les deux cylindres de réfrigération (11, 12), et qui est dotée d'une ouverture de distribution axiale, ledit dispositif de distribution étant **caractérisé en ce que** ladite chambre (602) dudit distributeur mélangeur (22) loge un élément (3) servant à façonner le flux de crème glacée, ledit élément (3) comprenant au moins deux paires de canaux (103, 203) qui ne communiquent pas l'une avec l'autre ; les canaux (103, 203) de chaque paire, qui sont diamétralement opposés l'un à l'autre par rapport à l'axe de ladite chambre (602) et dont les axes sont parallèles à celui de ladite chambre (602), communiquant entre eux par le biais de conduits (123, 223) appropriés, chacune desdites paires de canaux (103, 203) étant alimentée indépendamment par un des conduits (302, 402) reliés auxdits cylindres de réfrigération (11, 12) ; des moyens d'extrusion (313, 323) étant prévus et interagissant avec chacun desdits canaux.

2. Le dispositif de distribution selon la revendication 1, **caractérisé en ce que** lesdits conduits (302, 402) d'alimentation de la crème glacée audit distributeur mélangeur (22) sont positionnés sur des plans transversaux différents.

3. Le dispositif de distribution selon 1a revendication 1, **caractérisé en ce que** les canaux (103) d'une paire sont angulairement équidistants des canaux (203) de l'autre paire.

4. Le dispositif de distribution selon l'une quelconque des revendications précédentes, **caractérisé en ce que** lesdits moyens d'extrusion interagissant avec chacun desdits canaux (103, 203) dudit élément de façonnage (3) comprennent des pistons (313, 323) pouvant coulisser axialement dans lesdits canaux (103, 203).
